# EUROPEAN PATENT APPLICATION

(11) **EP 2 448 324 A1**
(43) Date of publication of application: **02.05.2012**
(21) Application number: 10801865.6
(22) Date of filing: 24.03.2010
(51) Int. Cl.: H04W 36/00

(54) **METHOD, APPARATUS AND SYSTEM FOR X2 HANDOVER**

(30) Priority: 23.07.2009 CN 200910158269
(71) Applicant: ZTE Corporation, Shenzhen, Guangdong 518057 (CN)
(72) Inventor: WANG, Dafei, Shenzhen Guangdong 518057 (CN); SU, Hongtao, Shenzhen Guangdong 518057 (CN); LIU, Lin, Shenzhen Guangdong 518057 (CN); SI, Wei, Shenzhen Guangdong 518057 (CN)
(74) Representative: Jansen, Cornelis Marinus
(86) International application number: PCT/CN2010/071263
(87) International publication number: WO 2011/009305

(57) **Abstract**

The present disclosure discloses a method, apparatus and system for implementing an X2 handover. In the scheme of the present disclosure, a Base Station (BS) initiates, after having determined the need for a handover and detected that there exists an X2 connection between the BS and a target BS and that the BS and the target BS are within the management scope of a same MME, an X2 handover, if it is determined that there exists a connection between the target BS and the serving gateway connected with the BS according to acquired serving gateways connected with an other BS. Here, the term "an/the other BS" refers to one different from the BS determines the need for a handover, and includes the target BS designated for a handover. By using the scheme provided herein in which a determination on whether an X2 handover condition is currently met, that is, whether there exists a connection between the target BS and the serving gateway connected with the BS, is accurately made before the BS initiates a handover, and an X2 handover is initiated by the BS when the X2 handover condition is met, the present disclosure effectively avoids the possibility of the failure of an X2 handover, increases the success rate of an X2 handover, and provides excellent user experience.

## Description

### TECHNICAL FIELD

The present disclosure relates to mobile communication technologies and more particularly to a method, apparatus and system for implementing an X2 handover.

### BACKGROUND

Handover, as a basic processing flow used in mobile communication systems to guarantee the mobility of a user, ensures the service continuity of a user moving between different mobile communication systems.

A User Equipment (UE) sends a measurement report to an E-UTRAN Node B (eNB). The eNB determines whether it can continue to serve the UE according to the measurement report, and selects another eNB as a target eNB for a handover if it is determined that it cannot continue to service the UE. Here, an eNB initiating a handover is referred to as a "source eNB." A source eNB initiates, after having detected that there exists an X2 connection between the source eNB and the target eNB and that the source eNB and the target eNB are within the management scope of a same Mobility Management Entity (MME), an X2 handover preferentially. In existing protocols there are provided two X2 handover scenes, one is X2 handover scene with no need for relocation of serving gateway (S-GW) (hereinafter referred to as "handover scene 1" for short) while another is X2 handover scene with the need for relocation of S-GW (hereinafter referred to as "handover scene 2" for short).

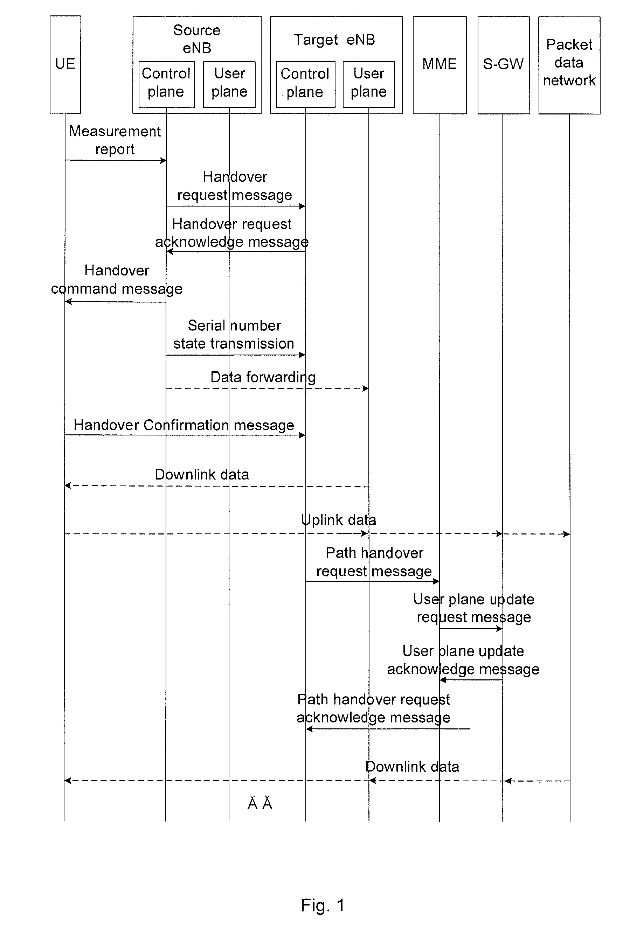

Fig. 1 is a schematic diagram illustrating the flow conducted in existing handover scene 1. As shown in Fig. 1, this flow specifically comprises the following processing:

A source eNB sends a target eNB a handover request message carrying the transmission layer address and the channel address of an S-GW;

After receiving the handover request message, the target eNB returns, to the source eNB, a handover request acknowledgement message carrying the transmission layer address and the channel address for a reverse transmission;

After receiving the handover request acknowledgement message, the source eNB sends a handover command message to a UE to instruct the UE to carry out a handover;

After receiving the handover command message, the UE carries out a handover, sends a handover confirmation (confirm) message to the target eNB to inform the target eNB of the establishment of an air link, and then starts sending uplink data to the target eNB;

The target eNB forwards the received uplink data to the S-GW;

The target eNB sends an MME a path handover (switch) request message carrying the transmission layer address and the channel address of the target eNB, to inform the S-GW that the downlink data of the UE can be transmitted through the target eNB; and

After receiving the path handover request message, the MME conducts a series of configurations and then returns a path handover (switch) request acknowledgement message to the target eNB. So far, the UE and the S-GW both have been switched to the target eNB so that uplink data and downlink data both can be transmitted through the target eNB.

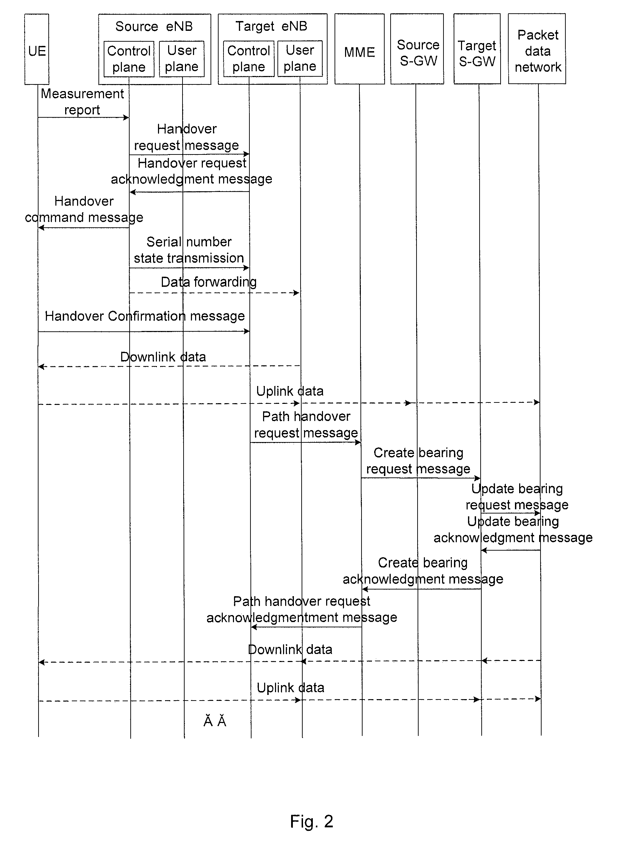

Fig. 2 is a schematic diagram illustrating the flow conducted in existing handover scene 2. As shown in Fig. 2, this flow specifically comprises the following processing:

The same as those conducted in handover scene 1 from the beginning of a handover to sending a path handover request message by a target eNB to an MME;

After receiving the path handover request message, the MME allocates a new S-GW, that is, a target S-GW, to the target eNB and returns, to the target eNB, a path handover request acknowledgement message carrying the transmission layer address and the channel address of the target S-GW; and

After receiving the path handover request acknowledge message, the target eNB forwards the uplink data received from the UE to the target S-GW rather than a source S-GW. So far, the UE is switched to the target eNB, and the target S-GW starts serving the target eNB.

However, the handover flows initiated in the above-described handover scenes, both ignore a critical problem that an X2 handover may fail when there exists no IP connection between an S-GW and a target eNB, causing a severe reduction in the success rate of the X2 handover.

With respect to handover scene 1, the problem may be specifically explained as follows. Once sending a handover acknowledgement request message to a target eNB, a UE starts sending uplink data to the target eNB. The target eNB, then, needs to forward the uplink data received from the UE to an S-GW. This inevitably requires an IP connection established between the target eNB and the S-GW. Accordingly, if there exists no such an IP connection, the uplink data of the UE will be totally lost and the handover will be consequentially terminated, leading to a failed X2 handover.

With regard to handover scene 2, the problem may be specifically explained as follows. Once sending a handover acknowledgement message to a target eNB, a UE starts sending uplink data to the target eNB. The target eNB, then, still needs to forward the uplink data received from the UE to a source S-GW until receiving a path handover request acknowledgement message, and then to a new target S-GW distributed by an MME. In this case, if there exists no IP connection between the target eNB and the source S-GW, the uplink data of the UE forwarded to the source S-GW will be totally lost, leading to a failed X2 handover.

Since in both handover scenes above, the failure of an X2 handover occurs after an UE has been accessed to a target eNB, it is impossible to initiate an S1 handover in time, which causes a low-quality user experience.

### SUMMARY

In view of the above, the present disclosure mainly aims to provide a method, apparatus and system for implementing an X2 handover to increase the success rate of the X2 handover.

In order to solve the above technical problem, the present disclosure provides a method for implementing an X2 handover, comprising determining, by a Base Station (BS), that a handover is needed, and detecting, by the BS, that there exists an X2 connection between the BS and a designated target BS and that the BS and the target BS are within the management scope of a same Mobility Management Entity (MME), wherein the method further comprises: initiating, by the BS, an X2 handover, if it is determined that there exists a connection between the target BS and the serving gateway connected with the BS according to acquired serving gateways connected with the target BS.

The method may further comprises: before determining that the handover is needed, providing the BS, by the target BS, with information about serving gateways connected with the target BS, when an X2 connection is established between the BS and the target BS; or, when there is a change in configuration of serving gateways connected with the target BS after an X2 connection has been established between the BS and the target BS, providing the BS, by the target BS with information about serving gateways connected with the target BS after configuration change.

Information about connected serving gateways may be carried in an X2 setup request message or an X2 setup response message, when the X2 connection is established between the target BS and the BS.

Information about connected serving gateways may be carried in a BS configuration update message, when there is a change in configuration of serving gateways connected with the target BS.

The method may further comprise: before providing with information about connected serving gateways, configuring, in the target BS, information about serving gateways connected with the target BS; or, providing the target BS, by the MME, with information about serving gateways connected with the target BS, when a connection is established between the target and the MME.

The method may further comprise: when the BS is disconnected from an other BS in an X2 connection with the BS, deleting, by the BS, corresponding information about serving gateways connected with the other BS.

The method may further comprise: initiating, by the BS, an S1 handover if it is determined by the BS that there exists no connection between the target BS and the serving gateway connected with the BS.

A base station for implementing an X2 handover, comprising: a connection information storage unit, configured to store information about serving gateways connected with a designated target BS; a handover determination unit, configured to trigger, after determining that a handover is needed and detecting that there exists an X2 connection exists between the BS and the target BS and that the BS and the target BS are within the management scope of a same MME, an X2 handover unit, if it is determined that there exists a connection between the target BS and the serving gateway connected with the BS according to acquired serving gateways connected with the target BS; and the X2 handover unit, configured to initiate an X2 handover.

The BS may further comprise a connection information receiving unit configured to receive information provided by the target BS about serving gateways connected with the target BS when an X2 connection is established between the target BS and the BS and to store the received information in the connection information storage unit; or, the connection information storage unit may be further configured to store information about the serving gateway connected with the BS, and the BS may further comprise an X2 connection management unit, configured to establish an X2 connection with the target BS and to trigger a connection information sending unit and the connection information sending unit, configured to provide the target BS with information stored in the connection information storage unit about the serving gateway connected with the BS; or, the connection information storage unit may be further used to store information about the serving gateway connected with the BS, and the BS may further comprise a configuration update unit, configured to update information stored in the connection information storage unit about the serving gateway connected with the BS and to trigger a connection information sending unit and the connection information sending unit, configured to provide the target BS with information stored in the connection information storage unit about the serving gateway connected with the BS.

Information stored in the connection information storage unit about serving gateways may be directly configured in the connection information storage unit, or the base station may further comprise a connection information receiving unit configured to receive information provided by the MME about the serving gateway connected with the BS and to store the received information in the connection information storage unit, or the base station may further comprise an X2 connection management unit configured to delete, when the BS is disconnected from an other BS in an X2 connection with the BS, information stored in the connection information storage unit about serving gateways connected with the other base station disconnected.

The BS may further comprise an S1 handover unit configured to initiate an S1 handover, the handover determination unit is further configured to trigger the S1 handover unit if it is determined that there exists no connection between the target BS and the serving gateway connected with the BS.

A system for implementing an X2 handover, comprising: a target BS, configured to provide a BS with information about serving gateways connected with the target BS; and the BS, configured to initiate, after determining that a handover is needed and detecting that there exists an X2 connection between the BS and the target BS and that the BS and the target BS are within the management scope of a same MME, an X2 handover, if it is determined that there exists a connection between the target BS and the serving gateway connected with the BS according to acquired serving gateways connected with the target BS.

Information provided by the target BS about serving gateways connected with the target BS, may be directly configured in the target BS; or, the system may further comprise the MME configured to provide the target BS with information about serving gateways connected with the target BS.

The BS may be further configured to: initiate an S1 handover if it is determined that there exists no a connection between the target BS and the serving gateway connected with the BS; and/or to delete, when the BS is disconnected from the target BS in an X2 connection with the BS, the information stored by the BS about serving gateways connected with the target BS.

By using the scheme provided herein in which a determination on whether an X2 handover condition is currently met, that is, whether there exists a connection between the target BS and the serving gateway connected with the BS, is accurately made before the BS initiates a handover, and an X2 handover is initiated by the BS when the X2 handover condition is met, the present disclosure effectively avoids the possibility of the failure of an X2 handover, increases the success rate of an X2 handover, and provides excellent user experience.

### BRIEF DESCRIPTION OF THE DRAWINGS

Fig. 1 is a schematic diagram illustrating the flow conducted in an existing handover scene 1;
Fig. 2 is a schematic diagram illustrating the flow conducted in an existing handover scene 2;
Fig. 3 is a schematic diagram illustrating an X2 handover flow according to the present disclosure;
Fig. 4 is a schematic diagram illustrating an X2 handover flow according to a specific embodiment of the present disclosure;
Fig. 5 is a schematic diagram illustrating the structure of a BS to implement an X2 handover according to the present disclosure; and
Fig. 6 is a schematic diagram illustrating the structure of a system to implement an X2 handover according to the present disclosure.

### DETAILED DESCRIPTION

In the present disclosure, a Base Station (BS) initiates, after having determined the need for a handover and detected that there exists an X2 connection between the BS and a target BS and that the BS and the target BS are within the management scope of a same MME, an X2 handover, if it is determined that there exists a connection between the target BS and the serving gateway connected with the BS according to acquired serving gateways connected with an other BS. Here, the term "an/the other BS" refers to one different from the BS determines the need for a handover, and includes the target BS designated for a handover.

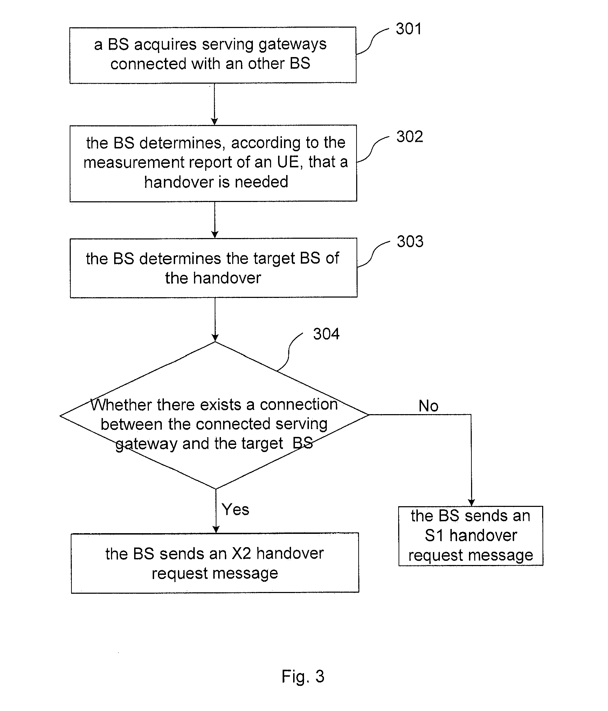

Fig. 3 is a schematic diagram illustrating an X2 handover flow according to the present disclosure. As shown in Fig. 3, the flow specifically comprises the following steps 301-304.

Step 301: a BS acquires serving gateways connected with an other BS.

Information about serving gateways connected with an other BS may be provided by an MME, when the other BS establishes a connection with the MME, and stored in the other BS. Information about serving gateways connected with an other BS may also be directly configured in the other BS, that is, information about all serving gateways connected with the other BS may be configured in the other BS by the operating and maintaining platform of the other BS.

In this way, a BS can exchange with an other BS on their respective information about connected serving gateways, when establishing a connection with the other BS. In addition, for an other BS which has already established an X2 connection with the BS, if there is a change in the configuration of serving gateways connected with the other BS (that is, there is a configuration update occurs in the other BS), the other BS after configuration update will also provide the BS with information about serving gateways connected with the other BS after configuration update. The BS then stores the received information about serving gateways connected with the other BS.

In particular, the above-mentioned information about serving gateways may be identifiers of the serving gateways.

Thus, by the means above, a BS can acquire serving gateways connected with an other BS, and similarly, an other BS can acquire serving gateways connected with the BS.

Besides, when disconnected from an other BS in an X2 connection, the BS deletes corresponding information about serving gateways connected with the other BS.

Steps 302-303: the BS determines, according to the measurement report delivered by an UE, that a handover is currently needed, designates a target BS for the handover, and detects that there exists an X2 connection between the BS and the target BS and that the BS and the target BS are within the management scope of a same MME;

Step 304: the BS determines whether there exists a connection between the target BS and the serving gateway connected with the BS according to the acquired serving gateways connected with the other BS, sends an X2 handover request message to the target BS to initiate an X2 handover if there is such a connection, otherwise, sends an S1 handover request message to the target BS to initiate an S1 handover.

Specifically, the determination of Step 304 is implemented as follows: the BS searches stored information to find information provided by the target BS about serving gateways connected with the target BS, and determines whether the found information about serving gateways can be matched with the information about the serving gateway connected with the BS. It is indicated that there exists a connection between the target BS and the serving gateway connected with the BS if the found information about serving gateways can be matched with the information about the serving gateway connected with the BS, otherwise there is no such a connection. Here, the term "the serving gateway connected with the BS" refers to a serving gateway currently serving for a handover.

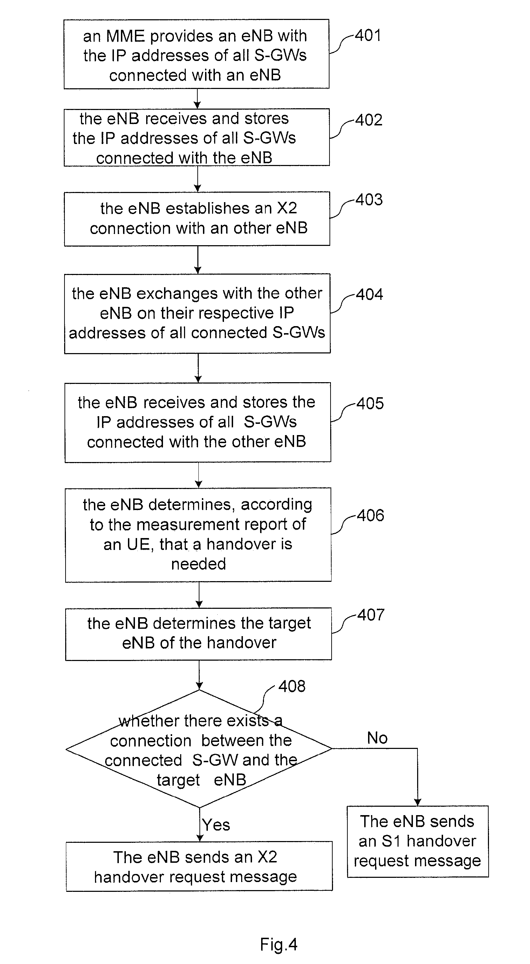

Fig. 4 is a schematic diagram illustrating an X2 handover flow according to a specific embodiment of the present disclosure, in which a BS refers in particular to an eNB and S-GW is short for serving gateway. As shown in Fig. 4, the X2 handover flow specifically comprises the following steps 401-408.

Steps 401-402: an MME provides an eNB with the IP addresses of all S-GWs connected with the eNB; and the eNB receives and stores the IP addresses of all S-GWs connected with the eNB.

After powered on, the eNB sends an S1 setup request message to the MME. After receiving the S1 setup request message, the MME returns, to the eNB, an S1 setup response message message carrying the IP addresses of all S-GWs connected with the eNB. After receiving the S1 setup response message, the eNB analyzes and stores the IP address of each of the S-GWs.

Steps 403-405: the eNB exchanges with an other eNB on their respective IP addresses of all connected S-GWs, when establishing an X2 connection with the other eNB; and the eNB receives and stores the IP addresses of all S-GWs connected with the other eNB. The IP addresses exchanged between the eNBs are carried in an X2 setup request message or X2 setup response message transmitted between the eNBs.

Further, if there is a change in the configuration of S-GWs conncted with an other eNB in an X2 connection with the eNB, the other eNB will also provides the eNB with the IP addresses of all S-GWs connected with the other eNB after configuration update. Smiliarly, if there is a change in the configuration of S-GWs connected with the eNB, the eNB will also provide other eNBs in X2 connection with the eNB with the IP addresses of all S-GWs connected with the eNB after configuration update. At this point, the IP addresses of all connected S-GWs can be carried in an eNB configuration update message transmitted between the eNBs.

Steps 406-407: the eNB determines, according to the measurement report delivered by an UE, that a handover is currently needed, designates a target eNB for the handover, and detects that there exists an X2 connection between the eNB and the target eNB and that the eNB and the target eNB are within the management scope of the same MME.

Step 408: the eNB determines whether there exists a connection between the target eNB and the S-GW connected with the eNB according to the acquired IP addresses of S-GWs connected with the other eNB, sends an X2 handover request message to the target eNB to initiate an X2 handover if there exists such a connection, otherwise, sends an S1 handover request message to the target eNB to initiate an S1 handover.

Specifically, the determination of Step 408 is implemented as follows: the eNB searches stored information to find the IP addresses of S-GWs connected with the target eNB provided by the target eNB, determines whether the found IP addresses of S-GWs can be matched with the IP address of the S-GW connected with the eNB. It is indicated that there exists a connection between the target eNB and the S-GW connected with the eNB if the found IP addresses of S-GWs can be matched with the IP address of the S-GW connected with the eNB; otherwise there exists no such a connection.

The term "the S-GW connected with the eNB" refers here to an S-GW currently serving for a handover. This S-GW refers to the S-GW in handover scene 1 shown in Fig. 1 and to the source S-GW in handover scene 2 shown in Fig. 2.

The term "target eNB" above refers to an eNB serving the UE after the current handover is completed but is not limited to a specified one. In fact, the term "target eNB" refers to a different eNB, depending on different handover processes.

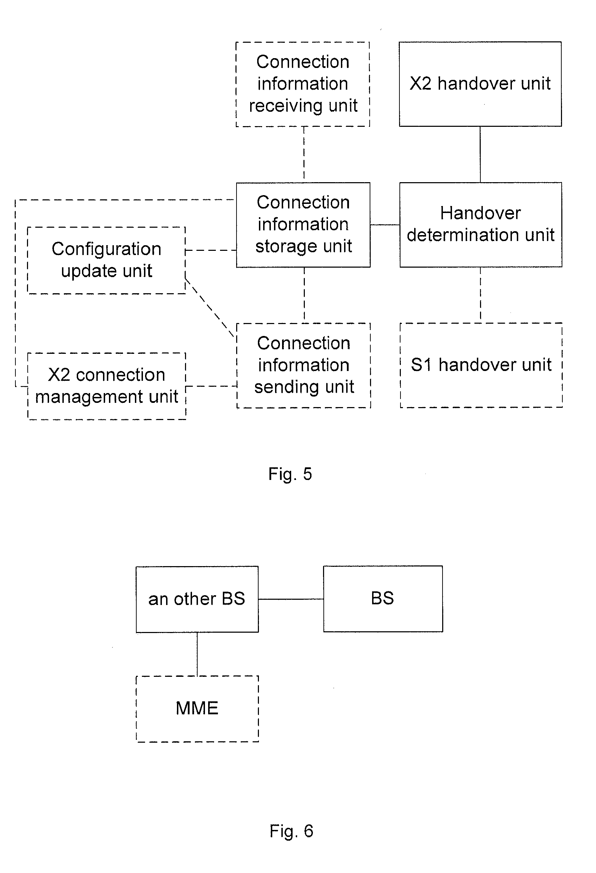

Fig. 5 is a schematic diagram illustrating the structure of a BS to implement an X2 handover according to the present disclosure. As shown in Fig. 5, the BS comprises a connection information storage unit, a handover determination unit and an X2 handover unit, wherein the connection information storage unit is used to store information about serving gateways connected with an other BS; the handover determination unit is used to trigger, after having determined the need for a handover and detected there exists an X2 connection between the BS and a designated target BS, the X2 handover unit, if it is determined that there exists a connection between the target BS and the serving gateway connected with the BS according to information stored in the connection information storage unit about serving gateways connected with other BS; and the X2 handover unit is used to initiate an X2 handover based on the triggering of the handover determination unit.

The BS may further comprises an S1 handover unit, wherein the handover determination unit is further used to trigger an S1 handover if it is determined that there exists no connection between the target BS and the serving gateway connected with the BS; and the S1 handover unit is used to initiate an S1 handover based on the triggering of the handover determination unit.

The BS may further comprises a connection information receiving unit used to receive information provided by an other BS about serving gateways connected with the other BS when an X2 connection is established between the other BS and the BS and to store the received information.

The BS may further comprises an X2 connection management unit and a connection information sending unit, wherein the connection information storage unit is further used to store information about the serving gateway connected with the BS; the X2 connection management unit is used to establish an X2 connection with the other BS and to trigger the connection information sending unit; and the connection information sending unit is used to provide the other BS with the information stored in the connection information storage unit about the serving gateway connected with the BS based on the triggering of the X2 connection management unit. The information stored in the connection information storage unit about the serving gateway may be directly configured in the connection information storage unit or come from an MME. In the case of coming from an MME, the BS should further comprises a connection information receiving unit to receive the information provided by the MME about the serving gateway connected with the BS and to store the received information in the connection information storage unit.

The BS may further comprise an X2 connection management unit used to delete the information stored in the connection information storage unit about serving gateways connected with an other BS in a X2 connection with the BS when the BS is disconnected from the other BS.

If in the information storage unit the information about the serving gateway connected with the BS is stored, the BS may further comprise a configuration update unit and a connection information sending unit, wherein the configuration update unit is used to update the information stored in the connection information storage unit about the serving gateway connected with the BS and to trigger the connection information sending unit; and the connection information sending unit is used to provide the other BS with the information stored in the connection information storage unit about the serving gateway connected with the BS based on the triggering of the configuration update unit.

Fig. 6 is a schematic diagram illustrating the structure of a system to implement an X2 handover according to the present disclosure. As shown in Fig. 6, the system comprises a BS and an other BS different from the BS, wherein the other BS is used to provide the BS with information about connected serving gateways; and the BS is used to initiate, after having determined the need for a handover and detected there exists an X2 connection between the BS and a designated target BS, an X2 handover, if it is determined there exists a connection between the target BS and the serving gateway connected with the BS according to acquired information about serving gateways connected with the other BS.

The BS is further used to initiate an S1 handover if it is determined there exists no connection between the target BS and the serving gateway connected with the BS.

The BS is further used to provide an other BS with information about the serving gateway connected with the BS when establishing an X2 connection with the other BS.

The BS is further used to delete information stored in the BS about serving gateways connected with an other BS in an X2 connection with the BS when disconnected from the other BS.

Information provided by the other BS about connected serving gateways may be directly configured in the other BS or come from an MME. In the case of coming from an MME, the system further comprises the MME used to provide the other BS with information about serving gateways connected with the other BS.

The other BS is further used to provide the BS, when there is a change in the configuration of connected serving gateways, with information about serving gateways connected with the other BS after configuration update.

The above-described embodiments are only preferred ones of the present disclosure but not limitation to the protection scope of the present disclosure.

## Claims

1. A method for implementing an X2 handover, comprising determining, by a Base Station (BS), that a handover is needed, and detecting, by the BS, that there exists an X2 connection between the BS and a designated target BS and that the BS and the target BS are within the management scope of a same Mobility Management Entity (MME), wherein the method further comprises:
initiating, by the BS, an X2 handover, if it is determined that there exists a connection between the target BS and the serving gateway connected with the BS according to acquired serving gateways connected with the target BS.

2. The method according to claim 1, further comprising, before determining that the handover is needed,
providing the BS, by the target BS, with information about serving gateways connected with the target BS, when an X2 connection is established between the BS and the target BS; or
when there is a change in configuration of serving gateways connected with the target BS after an X2 connection has been established between the BS and the target BS, providing the BS, by the target BS, with information about serving gateways connected with the target BS after configuration change.

3. The method according to claim 2, wherein
information about connected serving gateways is carried in an X2 setup request message or an X2 setup response message, when the X2 connection is established between the target BS and the BS;
information about connected serving gateways is carried in a BS configuration update message, when there is a change in configuration of serving gateways connected with the target BS.

4. The method according to claim 2, further comprising, before providing with information about connected serving gateways,
configuring, in the target BS, information about serving gateways connected with the target BS, or
providing the target BS, by the MME, with information about serving gateways connected with the target BS, when a connection is established between the target BS and the MME.

5. The method according to any one of claims 1-4, further comprising:
when the BS is disconnected from an other BS in an X2 connection with the BS, deleting, by the BS, corresponding information about serving gateways connected with the other BS.

6. The method according to any one of claims 1-4, further comprising: initiating, by the BS, an S1 handover if it is determined by the BS that there exists no connection between the target BS and the serving gateway connected with the BS.

7. A base station for implementing an X2 handover, comprising:
a connection information storage unit, configured to store information about serving gateways connected with a designated target BS;
a handover determination unit, configured to trigger, after determining that a handover is needed and detecting that there exists an X2 connection exists between the BS and the designated target BS and that the BS and the designated target BS are within the management scope of a same MME, an X2 handover unit, if it is determined that there exists a connection between the target BS and the serving gateway connected with the BS according to acquired serving gateways connected with the target BS; and
the X2 handover unit, configured to initiate an X2 handover.

8. The base station according to claim 7, wherein
The BS further comprises a connection information receiving unit configured to receive information provided by the target BS about serving gateways connected with the target BS when an X2 connection is established between the target BS and the BS and to store the received information in the connection information storage unit; or
the connection information storage unit is further configured to store information about the serving gateway connected with the BS, and the BS further comprises:
an X2 connection management unit, configured to establish an X2 connection with the target BS and to trigger a connection information sending unit; and
the connection information sending unit, configured to provide the target BS with information stored in the connection information storage unit about the serving gateway connected with the BS; or
the connection information storage unit is further used to store information about the serving gateway connected with the BS, and the BS further comprises:
a configuration update unit, configured to update information stored in the connection information storage unit about the serving gateway connected with the BS and to trigger a connection information sending unit; and
the connection information sending unit, configured to provide the target BS with information stored in the connection information storage unit about the serving gateway connected with the BS.

9. The base station according to claim 8, wherein
information stored in the connection information storage unit about serving gateways is directly configured in the connection information storage unit, or
the base station further comprises a connection information receiving unit configured to receive information provided by the MME about the serving gateway connected with the BS and to store the received information in the connection information storage unit, or
the base station further comprises an X2 connection management unit configured to delete, when the BS is disconnected from an other BS in an X2 connection with the BS, information stored in the connection information storage unit about serving gateways connected with the other base station disconnected.

10. The base station according to any one of claims 7-9, further comprising an S1 handover unit configured to initiate an S1 handover,
the handover determination unit is further configured to trigger the S1 handover unit if it is determined that there exists no connection between the target BS and the serving gateway connected with the BS.

11. A system for implementing an X2 handover, comprising:
a target BS, configured to provide a BS with information about serving gateways connected with the target BS; and
the BS, configured to initiate, after determining that a handover is needed and detecting that there exists an X2 connection between the BS and the target BS and that the BS and the target BS are within the management scope of a same MME, an X2 handover, if it is determined that there exists a connection between the target BS and the serving gateway connected with the BS according to acquired serving gateways connected with the target BS.

12. The system according to claim 11, wherein
information provided by the target BS about serving gateways connected with the target BS, is directly configured in the target BS, or
the system further comprises the MME configured to provide the target BS with information about serving gateways connected with the target BS.

13. The system according to claim 11 or 12, wherein the BS is further configured to:
initiate an S1 handover if it is determined that there exists no a connection between the target BS and the serving gateway connected with the BS; and/or
delete, when the BS is disconnected from the target BS in an X2 connection with the BS, the information stored by the BS about serving gateways connected with the target BS.
